# EUROPÄISCHE PATENTSCHRIFT

(11) **EP 1 305 370 B1**
(45) Veröffentlichungstag und Bekanntmachung des Hinweises auf die Patenterteilung: **23.08.2006**
(21) Anmeldenummer: 01956533.2
(22) Anmeldetag: 14.07.2001
(51) Int. Cl.: C09B 62/095, C09B 62/515

(54) **WASSERLÖSLICHE FASERREAKTIVE FARBSTOFFE, VERFAHREN ZU IHRER HERSTELLUNG UND IHRE VERWENDUNG**
WATER-SOLUBLE FIBER-REACTIVE COLORANTS, METHOD FOR THE PRODUCTION THEREOF, AND THEIR USE
COLORANTS HYDROSOLUBLES REAGISSANT AVEC LES FIBRES, PROCEDE DE PREPARATION ET UTILISATION DESDITS COLORANTS

(30) Priorität: 22.07.2000 DE 10035805
(43) Veröffentlichungstag der Anmeldung: 02.05.2003
(73) Patentinhaber: DyStar Textilfarben GmbH & Co. Deutschland KG, 65926 Frankfurt am Main (DE)
(72) Erfinder: STECKELBERG, Joachim, 25541 Brunsbüttel (DE); HENK, Hermann, 51061 Köln (DE)
(86) Internationale Anmeldenummer: PCT/EP2001/008151
(87) Internationale Veröffentlichungsnummer: WO 2002/008342

(56) Entgegenhaltungen:
- DE-A- 3 516 667

## Beschreibung

Die Erfindung liegt auf dem technischen Gebiet der faserreaktiven Azofarbstoffe.

Die Offenlegungsschrift DE 3516667 beschreibt grüne bis olivefarbige Metallkomplexfarbstoffe zur Verwendung als Reaktivfarbstoffe für Baumwolle, Wolle oder Polyamid. Diese besitzen jedoch gewisse anwendungstechnische Mängel, wie beispielsweise eine zu große Abhängigkeit der Farbausbeute von wechselnden Färbeparametern im Färbeprozess, oder einen ungenügenden oder unegalen Farbaufbau auf Baumwolle, wobei sich ein guter Farbaufbau aus der Fähigkeit eines Farbstoffes ergibt, bei Anwendung erhöhter Farbstoffkonzentrationen im Färbebad die entsprechend farbstärkere Färbung zu liefern. Des weiteren zeigen diese Farbstoffe nur unbefriedigende Fixierausbeuten d. h. derjenigen Anteil an Farbstoff der auf der zu färbenden Ware dauerhaft fixiert ist, ist zu gering, insbesondere bei niedrigen Temperaturen, sowie unbefriedigende Waschechtheiten.

Es ist jedoch aus ökologischen und ökonomischen Gründen wichtig Farbstoffe bereitzustellen, die besonders hohe Fixierausbeuten haben, um den Anteil an nicht fixiertem Farbstoff im Färbereiabwasser möglichst gering zu halten. Auch sollten Farbstoffe möglichst unabhängig von wechselnden Färbeparametern, wie z.B. Färbetemperatur im Färbeprozess, stets gleichmäßig farbstarke Färbungen liefern. Ferner werden heutzutage größere Anforderungen an die Waschechtheit gestellt.

Mit der vorliegenden Erfindung wurde nunmehr gefunden, dass Farbstoffe der allgemeinen Formel (1) überraschenderweise deutlich bessere Waschechtheiten liefern. Diese Farbstoffe haben zudem höhere Fixierausbeuten und eine deutlich geringere Parameterabhängigkeit beim Färben. Sie lassen sich daher auch besser mit anderen Farbstoffen, die bei deutlich niedrigeren Temperaturen fixieren, kombinieren.

Die Erfindung betrifft somit Farbstoffe der allgemeinen Formel (1): 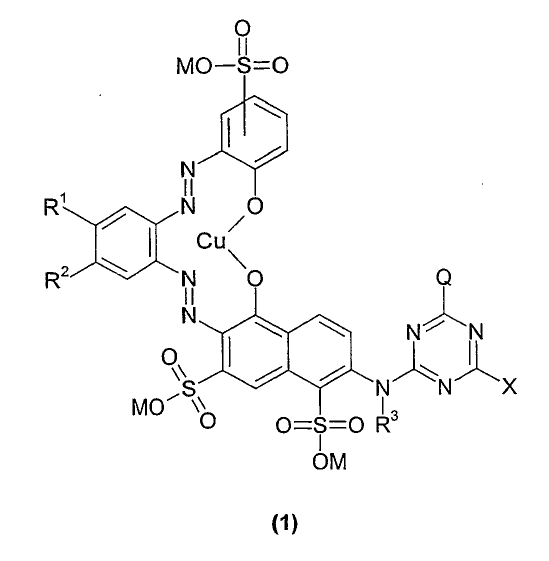 worin
- M: für Wasserstoff, Alkali, Ammonium oder für das Äquivalent eines Erdalkali Ions steht,
- X: Halogen ist, wie beispielsweise Fluor oder Chlor, C₁-C₄ Alkoxy, wie zum Beispiel Methoxy oder Ethoxy, Amino, ein 5- oder 6-gliedriger Stickstoff Heterozyklus der Formel (a), (b) (c) oder (d) 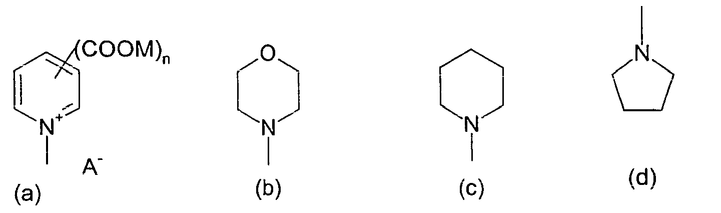 wobei wenn X eine Gruppe der Formel (a) ist
A- für Fluorid, Chlorid, oder für das Äquivalent eines Sulfations steht und n 1 oder 2 bedeutet;
oder X ist ein gegebenenfalls mit ein oder zwei Sulfo- oder Hydroxy substituiertes Anilino, ein Alkylamino oder N,N-Dialkylamino mit C₁-C₄-Alkyl, beispielsweise N,N Dimethylamino, oder N,N-Diethylamino, bevorzugt Chloro oder Fluoro
- R¹: C₁-C₆ Alkyl ist, wie Methyl, Ethyl, n-Propyl-. i-Propyl-, n-Butyl-, i-Butyl-, sec-Butyl-, tert-Butyl-, Pentyl-, Hexyl-, C₁-C₆-Alkoxy, wie Methoxy-, Ethoxy-, Propyloxy-, Butyloxy-, Chlor, C₁-C₄- Alkylcarbonylamino-, wie zum Beispiel Methylcarbonylamino-, Ethylcarbonylamino-, Propylcarbonylamino-, Butylcarbonylamino-, Arylcarbonylamino-, wie zum Beispiel Phenylcarbonylamino und ist bevorzugt Methoxy;
- R²: hat eine Bedeutung von R¹ und ist bevorzugt Methoxy oder aber R¹ und R² bilden einen Ring der Formel (f) oder (g): 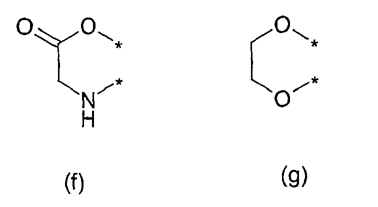
- R³: C₁-C₆-Alkyl ist, wie Methyl, Ethyl, n-Propyl-, i-Propyl-, n-Butyl-, i-Butyl-, sec-Butyl-, tert-Butyl-, Pentyl-, Hexyl oder Wasserstoff und ist bevorzugt Wasserstoff
- Q: eine Gruppierung der Formel (e) ist 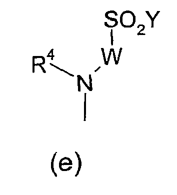 worin
- R⁴: eine Bedeutung von R₃ hat oder Phenyl ist, das durch Chlor oder Sulfo substituiert sein kann und ist bevorzugt Methyl oder Wasserstoff.
- W: eine CₙH₂ₙ- Alkylengruppe ist, mit n gleich 2 bis 6, welche durch 1 oder 2 Sauerstoffatome oder eine NR⁵Gruppe unterbrochen sein kann und ist bevorzugt Ethylen, Propylen, 3-Oxopentylen,
R⁵ eine Bedeutung von R³ hat oder Phenyl, bevorzugt Methyl ist, oder aber wenn X Fluoro oder Chloro ist, kann Q eine Gruppe der Formel (a), (b), (c) oder (d) bedeuten, bevorzugt bedeutet Q einen Rest der Formel (b) oder (a), besonders bevorzugt ist Q eine Gruppierung der Formel (e);
- Y: ist Vinyl oder ist eine Gruppierung der Formel CH₂CH₂Z worin
- Z: eine durch Einwirkung von Alkali eliminierbare Gruppierung wie z.B. Chloro, Acetyl, Phosphato, quaternäre Sticktoffgruppe und besonders bevorzugt Sulfato ist.

Die erfindungsgemäßen Farbstoffe können als Präparation in fester oder in flüssiger (gelöster) Form vorliegen. In fester Form enthalten sie im allgemeinen die bei wasserlöslichen und insbesondere faserreaktiven Farbstoffen üblichen Elektrolytsalze, wie Natriumchlorid, Kaliumchlorid und Natriumsulfat, und können zusätzlich die in Handelsfarbstoffen üblichen Hilfsmittel enthalten, wie Puffersubstanzen, die einen pH-Wert in wässriger Lösung zwischen 3 und 7 einzustellen vermögen, wie Natriumacetat, Natriumborat, Natriumhydrogencarbonat, Natriumdihydrogenphosphat, Natriumtricitrat und Dinatriumhydrogenphosphat, geringe Mengen an Sikkativen oder, falls sie in flüssiger, wässriger Lösung (einschließlich des Gehaltes von Verdickungsmitteln, wie sie bei Druckpasten üblich sind) vorliegen, Substanzen, die die Haltbarkeit dieser Präparationen gewährleisten, wie beispielsweise schimmelverhütende Mittel.

Im allgemeinen liegen die erfindungsgemäßen Farbstoffe als Farbstoffpulver mit einem Gehalt von 10 bis 80 Gew.-%, bezogen auf das Farbstoffpulver bzw. die Präparation, an einem Elektrolytsalz, das auch als Stellmittel bezeichnet wird, vor. Diese Farbstoffpulver können zudem die erwähnten Puffersubstanzen in einer Gesamtmenge von bis zu 10 Gew.-%, bezogen auf das Farbstoffpulver enthalten. Sofern die erfindungsgemäßen Farbstoffe in wässriger Lösung vorliegen, beträgt der Gesamtfarbstoffgehalt in diesen wässrigen Lösungen bis zu etwa 50 Gew.-%, wie beispielsweise zwischen 5 und 50 Gew.-%., wobei der Elektrolytsalzgehalt in diesen wässrigen Lösungen bevorzugt unterhalb 10 Gew.-%, bezogen auf die wässrige Lösung, beträgt; die wässrigen Lösungen (Flüssigpräparationen) können die erwähnten Puffersubstanzen in der Regel in einer Menge von bis zu 10 Gew.-%, bevorzugt bis zu 2 Gew.-%, enthalten.

Die erfindungsgemäßen Farbstoffe können in üblicher Weise hergestellt werden, so beispielsweise mittels der üblichen Diazotierungs-, Kupplungs- und Kupferungsreaktionen und Umsetzungsreaktionen mit einer Trihalogentriazin-komponente gefolgt von einer Einführung von Q durch Substitution eines Halogens
wobei Q die oben genannte Bedeutung hat, unter Verwendung von entsprechenden Mischungen solcher Komponenten in einer dem Fachmann geläufigen Weise und mit den hierzu erforderlichen Mengenanteilen.

Beispielsweise kann man ausgehend von einer Verbindung der Formel (1a) durch Diazotierung mit Natriumnitrit in wässriger Salzsäure und anschließende Kupplung auf eine Verbindung der Formel (1b) einen Farbstoff der Formel 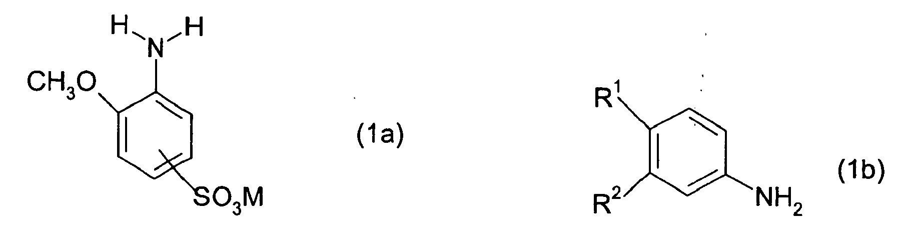 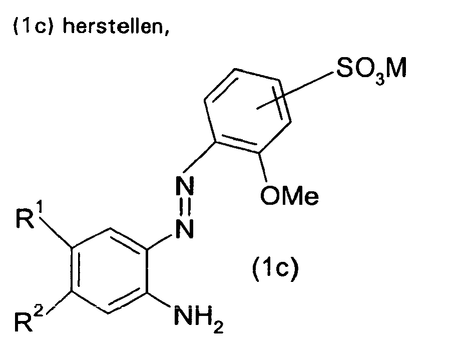 der durch eine weitere Diazotierung mit Natriumnitrit im Salzsauren gefolgt von einer Kupplung auf ein mit R³ N-substituiertes 5-Hydroxy-1,7-disulfo-2-naphthylamin eine Verbindung der Formel (1d) ergibt.

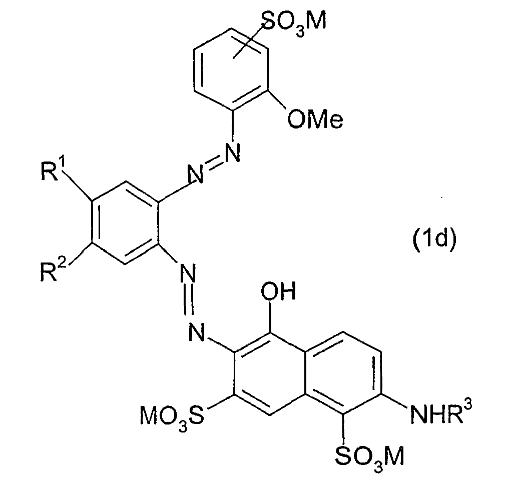

Durch Umsetzung mit Kupfersulfat-Pentahydrat und Ammoniak bei 80 bis 100°C erhält man einen Chromophor der Formel (1e)

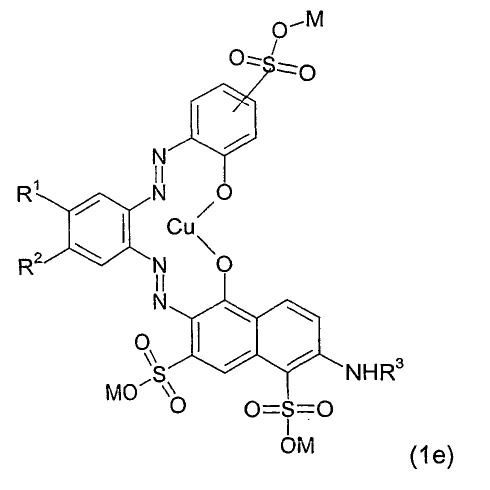

Durch Umsetzung des Chromophors der Formel (1 e) mit einem Trihalogentriazin im Neutralen bei 0°C und anschließender Reaktion der so erhaltenen Dihalogeno-triazinyl-Bisazoverbindung (1 f) 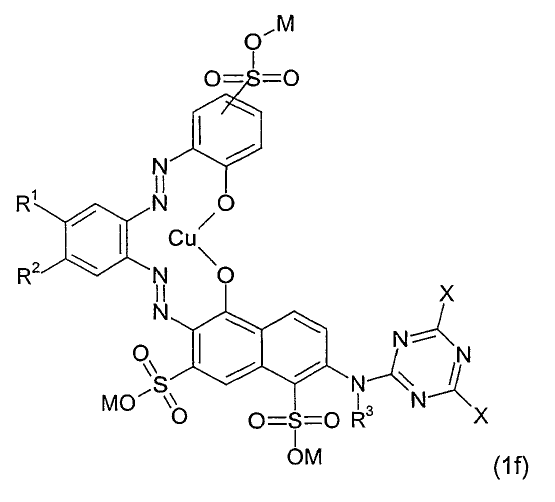 mit Q-H, wobei Q wie oben angegeben definiert ist, erhält man die erfindungsgemäße Verbindung (1).

Die Abscheidung und Isolierung der erfindungsgemäßen Verbindungen der allgemeinen Formel (1) aus den wäßrigen Syntheselösungen kann nach allgemein bekannten Methoden für wasserlösliche Verbindungen erfolgen, so beispielsweise durch Ausfällen aus dem Reaktionsmedium mittels eines Elektrolyten, wie beispielsweise Natriumchlorid oder Kaliumchlorid, oder durch Eindampfen der Reaktionslösung selbst, beispielsweise durch Sprühtrocknung. Falls die letztgenannte Art der Isolierung gewählt wird, empfiehlt es sich vielfach, vor dem Eindampfen eventuell in den Lösungen vorhandene Sulfatmengen durch Fällung als Calciumsulfat und Abtrennung mittels Filtration zu entfernen.

Die erfindungsgemäßen Farbstoffe besitzen wertvolle anwendungstechnische Eigenschaften. Sie werden zum Färben oder Bedrucken von hydroxy- und/oder carbonamidgruppenhaltigen Materialien, beispielsweise in Form von Flächengebilden, wie Papier und Leder oder von Folien, wie beispielsweise aus Polyamid, oder in der Masse, wie beispielsweise von Polyamid und Polyurethan, insbesondere aber von diesen Materialien in Faserform verwendet. Auch können die bei der Synthese der Azoverbindungen anfallenden Lösungen der erfindungsgemäßen Farbstoffe, gegebenenfalls nach Zusatz einer Puffersubstanz, gegebenenfalls auch nach Konzentrieren oder Verdünnen, direkt als Flüssigpräparation der färberischen Verwendung zugeführt werden.

Die vorliegende Erfindung betrifft somit auch die Verwendung der erfindungsgemäßen Farbstoffe zum Färben oder Bedrucken dieser Materialien bzw. Verfahren zum Färben oder Bedrucken solcher Materialien in an und für sich üblichen Verfahrensweisen, bei welchen man erfindungsgemäße Farbstoffe als Farbmittel einsetzt. Bevorzugt kommen die Materialien in Form von Fasermaterialien zur Anwendung, insbesondere in Form von Textilfasern, wie Geweben oder Garnen, wie in Form von Strängen oder Wickelkörpern.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Farbstoffe lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren. So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, Färbungen mit sehr guten Waschechtheiten. Man färbt bevorzugt in wäßrigem Bad bei Temperaturen zwischen 40 und 105°C, gegebenenfalls bei einer Temperatur bis zu 130°C unter Druck, und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gegebenenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls nach den üblichen Druckverfahren für Cellulosefasern, die einphasig - beispielsweise durch Bedrucken mit einer Natriumbicarbonat oder ein anderes säurebindendes Mittel enthaltenden Druckpaste und anschließendes Dämpfen bei 100 bis 103°C, - oder zweiphasig - beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des alkalisch überklotzten Materials, - durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der erfindungsgemäßen Farbstoffe auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen.

Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Die Cellulosefärbungen zeigen nach der üblichen Nachbehandlung durch Spülen zur Entfernung von nicht fixierten Farbstoffanteilen sehr gute Farbstoffeigenschaften und liefern nach den in der Technik üblichen Anwendungs- und Fixiermethoden für faserreaktive Farbstoffe auf den in der Beschreibung genannten Materialien, wie Cellulosefasermaterialien, insbesondere Baumwolle und Viskose, farbstarke olivefarbige Färbungen und Drucke mit sehr guten Echtheitseigenschaften, von denen vor allem die sehr guten Wasch-, Licht-, Alkali-, Säure-, Wasser-, Meerwasser-, Schweiß- und Reibechtheiten hervorgehoben werden können. Die Färbungen zeichnen sich weiterhin durch ihren hohen Fixiergrad und guten Aufbau auf den Cellulosematerialien aus. Besonders vorteilhaft ist die gute Waschechtheit der Färbungen der hohe Fixierwert sowie die geringe Temperaturabhängigkeit gegenüber dem Stand der Technik.

Des weiteren können die erfindungsgemäßen Farbstoffe auch für das faserreaktive Färben von Wolle Verwendung finden. Auch lässt sich filzfrei oder filzarm ausgerüstete Wolle (vgl. bspw. H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Colourists 1972, 93-99, und 1975, 33-44) mit sehr guten Echtheitseigenschaften färben.

Das Verfahren des Färbens auf Wolle erfolgt hierbei in üblicher und bekannter Färbeweise aus saurem Milieu. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der 3-fach molaren Menge einer Aminobenzolsulfonsäure und/oder einer Aminonaphthalinsulfonsäure oder auf Basis eines Umsetzungsproduktes von beispielsweise Stearylamin mit Ethylenoxid. So werden beispielsweise die erfindungsgemäßen Farbstoffe bevorzugt zunächst aus saurem Färbebad mit einem pH von etwa 3,5 bis 5,5 unter Kontrolle des pH-Wertes dem Ausziehprozess unterworfen und der pH-Wert sodann, gegen Ende der Färbezeit, in den neutralen und gegebenenfalls schwach alkalischen Bereich bis zu einem pH-Wert von 8,5 angehoben, um besonders zur Erzielung von hohen Farbtiefen die volle reaktive Bindung zwischen den erfindungsgemäßen Farbstoffen und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder in geschlossenen Färbeapparaturen bei Temperaturen bis zu 106°C ausgeführt werden. Da die Wasserlöslichkeit der erfindungsgemäßen Farbstoffe sehr gut ist, lassen sie sich auch mit Vorteil bei üblichen kontinuierlichen Färbeverfahren einsetzen. Die erfindungsgemäßen Farbstoffe liefern auf den genannten Materialien grüne bis olivefarbige Färbungen.

Die nachstehenden Beispiele dienen zur Erläuterung der Erfindung. Die Teile sind Gewichtsteile, die Prozentangaben stellen Gewichtsprozente dar, sofern nicht anders vermerkt. Die in den Beispielen formelmäßig beschriebenen Verbindungen sind teilweise in Form der freien Säuren angegeben; im allgemeinen werden sie in Form ihrer Salze, vorzugsweise Natrium- oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen als solche oder in Form ihrer Salze, vorzugsweise Alkalimetallsalze, wie Natrium- oder Kaliumsalze, in die Synthese eingesetzt werden.

### Beispiel 1

a) 20,3 Teile 3-Amino-4-methoxybenzolsulfosäure werden in 100 Teilen Wasser neutral gelöst, mit 30 Teilen konz. Salzsäure und 30 Teilen Eis versetzt. Unter Rühren gibt man 6,9 Teile Natriumnitrit in 100 Teilen Wasser hinzu und rührt 60 Minuten nach. Überschüßiges Nitrit wird mit Amidosulfosäure zerstört. Man gibt 15, 3 Teile 3,4-Dimethoxyanilin hinzu und stellt den pH-Wert in Verlauf von 2 Stunden mit 10 % iger Sodalösung auf 4,0. Der ausgefallene Farbstoff wird abgesaugt.
b) Der unter a) hergestellte Farbstoff wird neutral gelöst, mit 6,9 Teilen Natriumnitrit versetzt und unter gutem Rühren zu einer Mischung aus 30 Teilen Eis und 50 Teilen konz. Salzsäure getropft. Man rührt 15 Minuten nach und zerstört überschüßiges Nitrit mit Amidosulfosäure. Man gibt 31 Teile 5-Hydroxy-1,7-disulfo-2-naphthylamin hinzu und stellt langsam auf pH 5 mit 10 % iger Sodalösung.
c) Die in b) erhaltene Reaktionslösung wird mit 25 Teilen Kupfersulfat-pentahydrat und einem Komplexbildner wie z.B. Ammoniak versetzt und 1-3 Stunden auf 80-100 °C erwärmt. Anschließend wird der Farbstoff durch Salzzugabe bei Raumtemperatur isoliert. Man erhält den Chromophor (A): 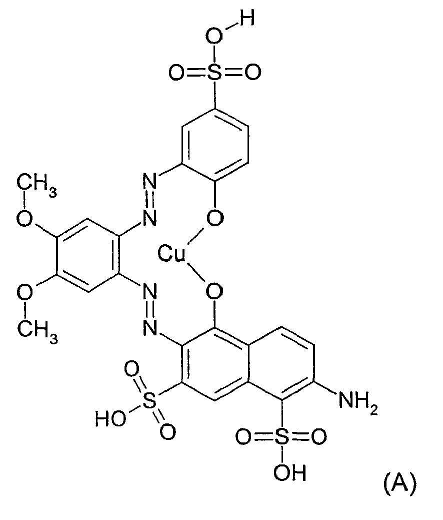 (A) läßt sich auf ähnliche Weise auch durch Einsatz von 3-Amino-4-chlorobenzolsulfosäure herstellen.
d) Der unter c) hergestellte Chromophor (A) wird neutral gelöst und unter gutem Rühren bei 0 °C mit 13,5 Teilen Trifluortriazin versetzt. Die so erhaltene Verbindung (B) wird nach 10 Minuten mit einer Lösung von 15 Teilen N-Methyl-N-(2-β-Sulfatoethylsulfonyl)ethylamin versetzt, wobei pH 5 mit Natriumbicarbonat Lösung gehalten wird und man läßt das Reaktionsgemisch auf Raumtemperatur kommen. Durch Salzzugabe wird der erfindungsgemäße 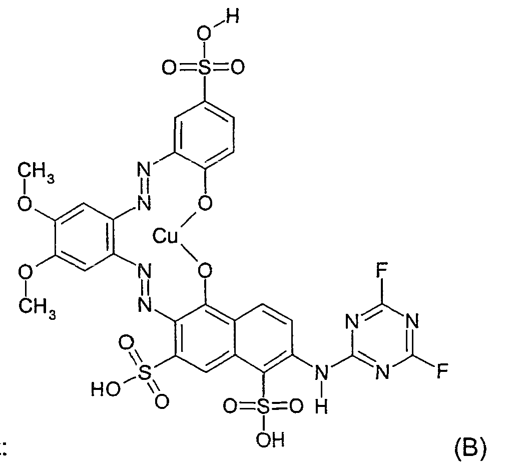 Farbstoff (C) isoliert:

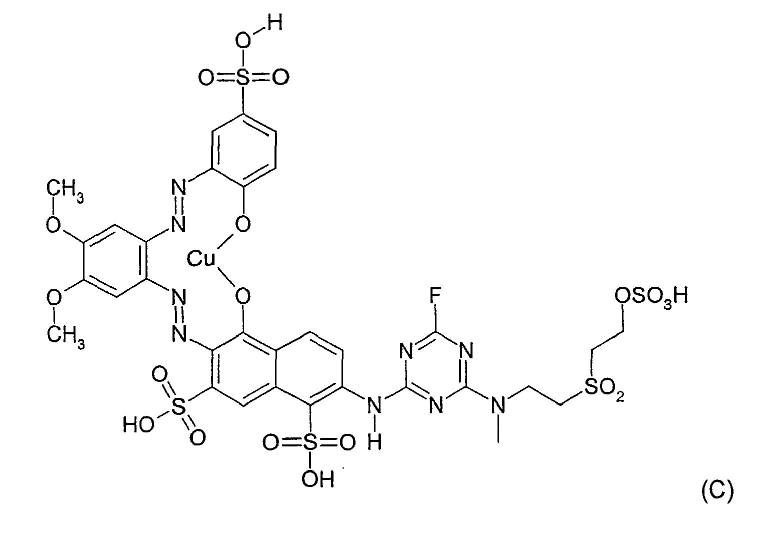

### Beispiel 2

Chromophor (A) wird neutral in 100 Teilen Wasser gelöst und bei 20-40 °C mit 18,5 g Trichlortriazin zu Verbindung (B) umgesetzt. Der pH-wert der Reaktionsmischung wird durch Zugabe 10 % iger Sodalösung gehalten. Anschließend gibt man 18 Teile des Amins (D) hinzu:

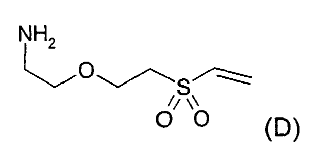

Die Farbstofflösung wird durch Membranentsalzung aufkonzentriert und sprühgetrocknet. Man erhält folgenden Farbstoff (E)

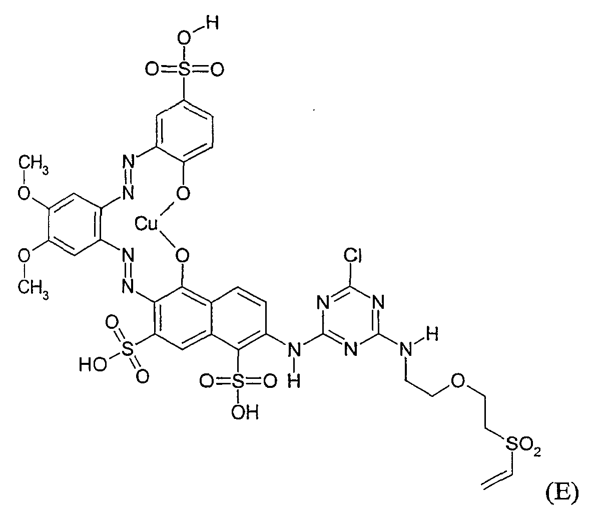

### Beispiel 3:

Verwendung von 3-Methoxy-4 Amino Sulfonsäure in Bsp. 1 a und 3-Methoxy-4-chloro-anilin in Bsp. 1 b liefert den analogen Farbstoff (F):

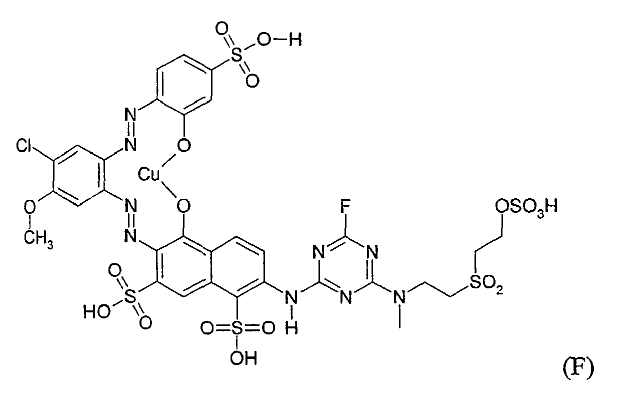

### Beispiel 4:

Der Farbstoff (C) wird neutral gelöst und mit Nicotinsäure versetzt. Man erhält Farbstoff (G):

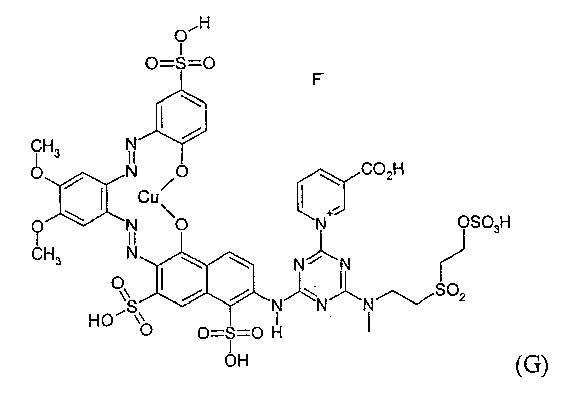

### Beispiel 5:

Die Difluortriazinverbindung (B) wird mit 9 Teilen Morpholin versetzt und bei pH 7 auf Raumtemperatur erwärmt. Durch Zugabe von 20 Gew. % Salz isoliert man durch Filtration Farbstoff (H).

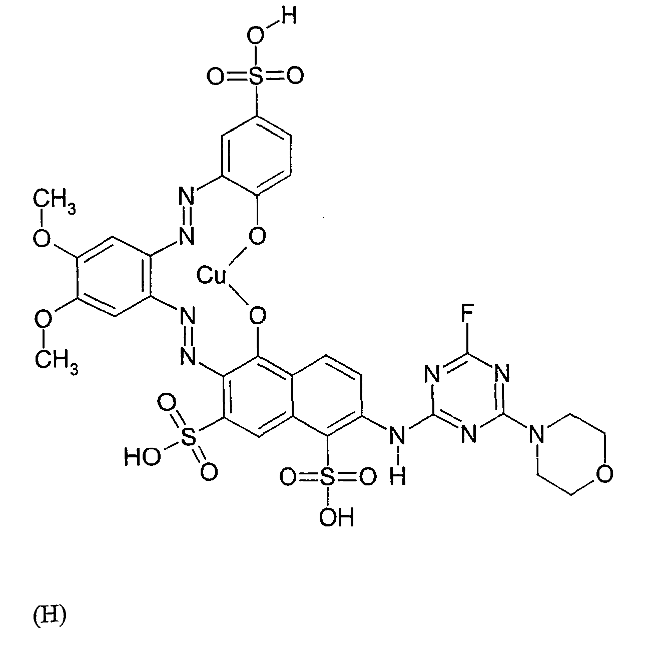

In der folgenden Tabelle sind weitere erfindungsgemäße Farbstoffe beschrieben, welche in Anlehnung an die obigen Beispiele hergestellt werden können.:

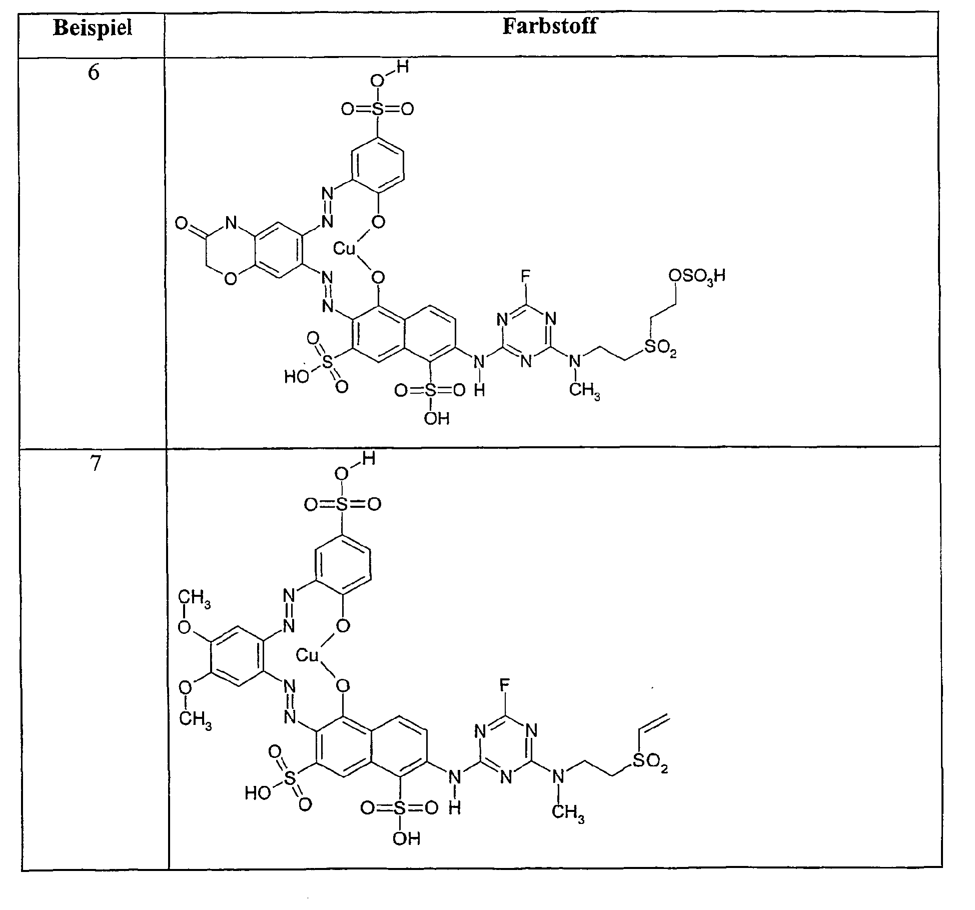

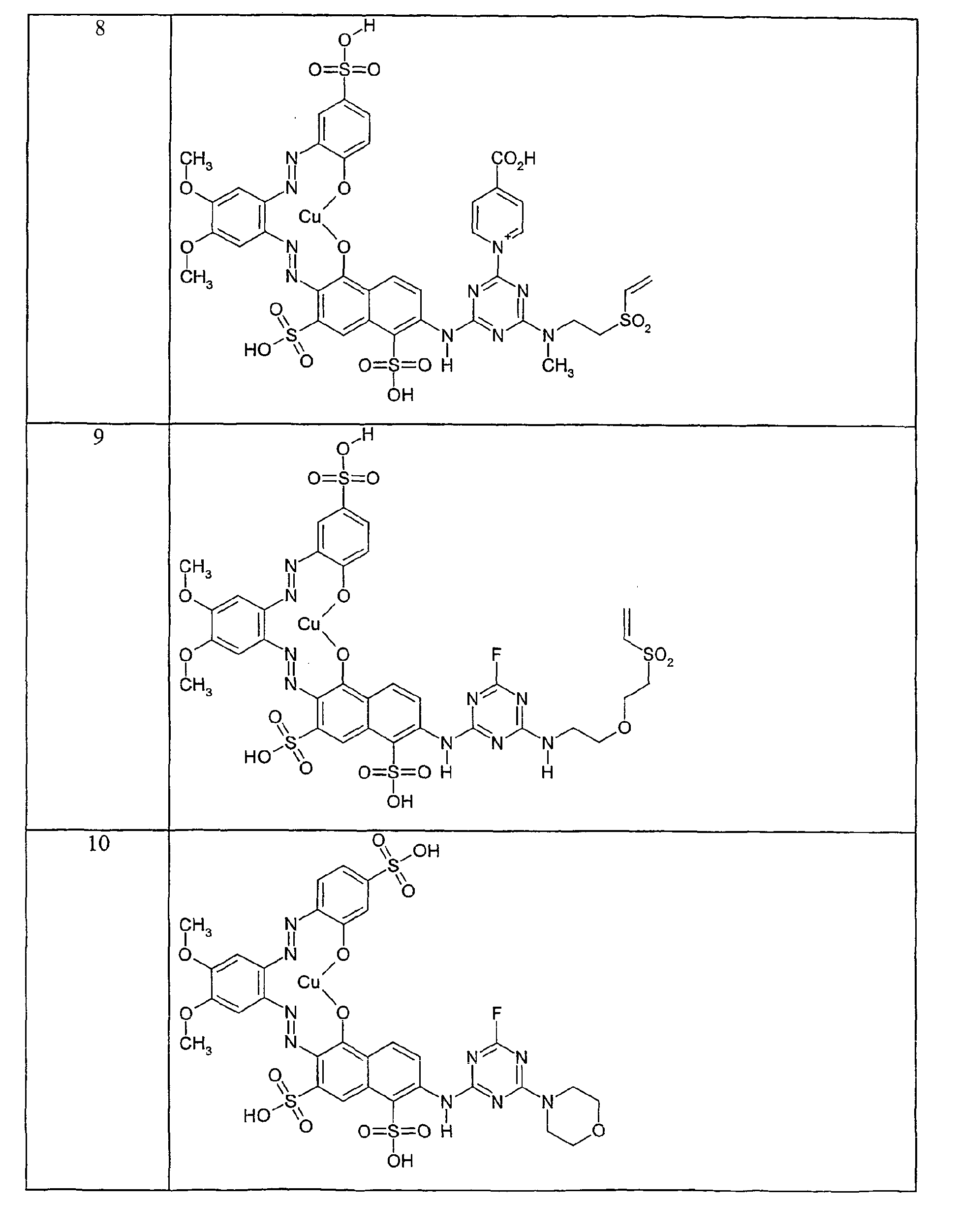

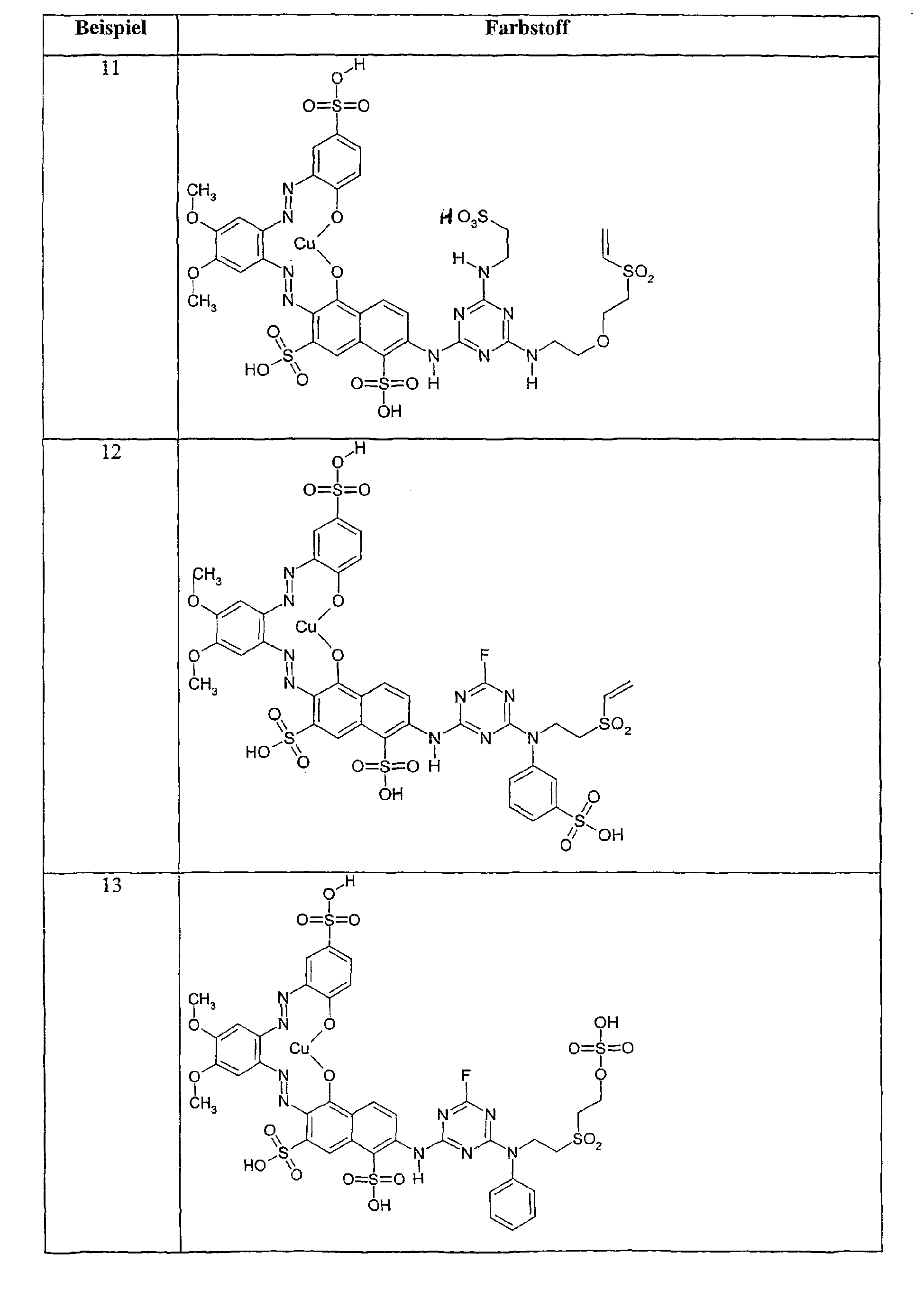

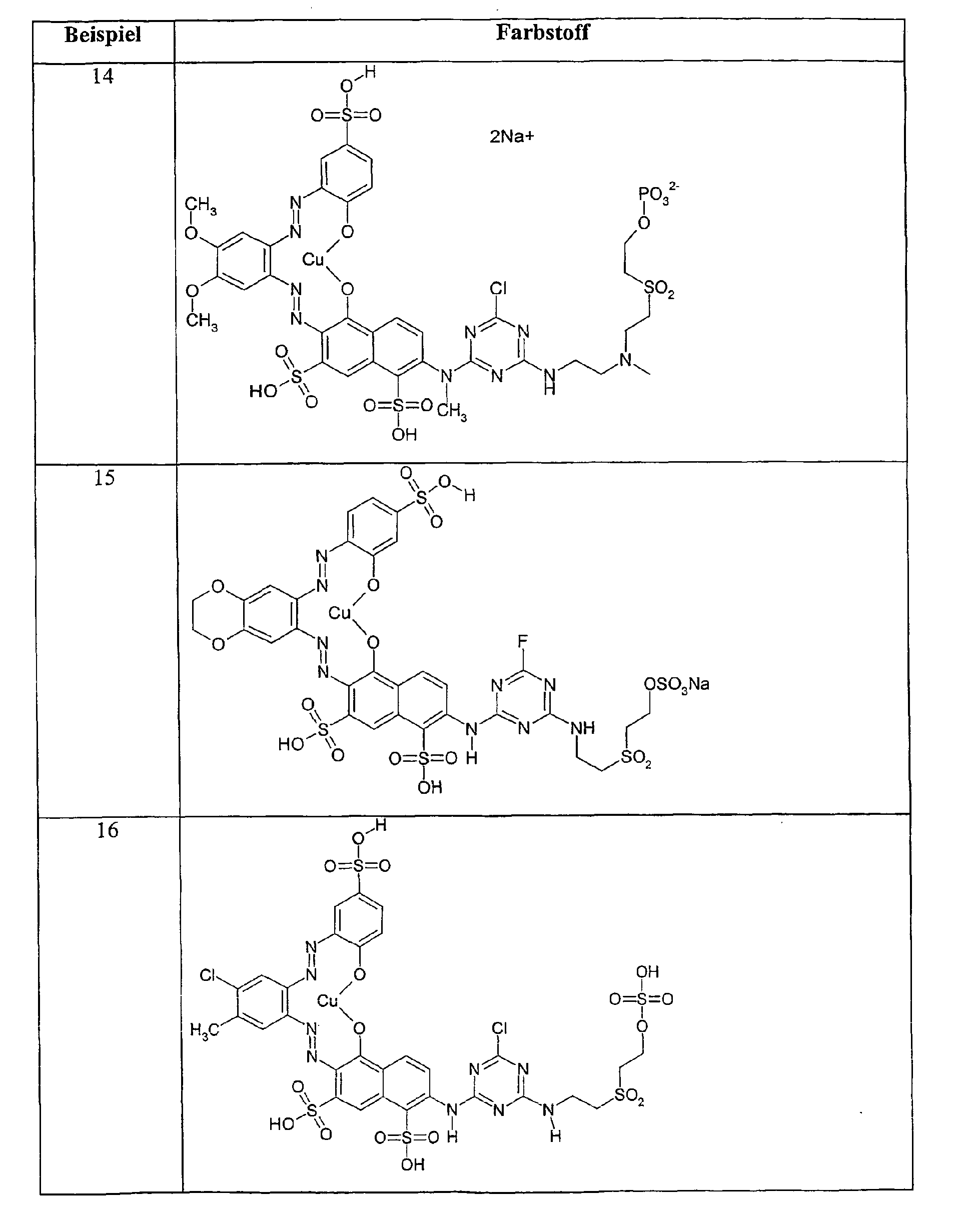

### Beispiel 17:

4 Teile des Farbstoffes aus Beispiel 2 werden in 200 Teilen Wasser gelöst. Man gibt 20 Teile Kochsalz,5 Teile Natronlauge und 20 Teile Baumwollgewebe hinzu, und erwärmt in einem Färbeapparat in 20 min. auf 60 °C. Bei dieser Temperatur wird 45 min gefärbt. Das Baumwollgewebe wird anschließend mit Wasser und verdünnter Essigsäure gespült und getrocknet. Man erhält eine olivgrüne Färbung mit sehr guter Waschechtheit.

## Patentansprüche

1. Farbstoffe der allgemeinen Formel (1): 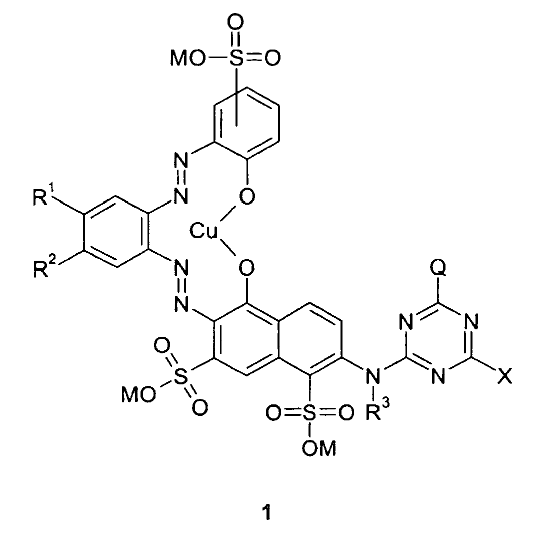 worin
M für Wasserstoff, Alkali, Ammonium oder für das Äquivalent eines Erdalkali Ions steht,
X ist Halogen, wie beispielsweise Fluor oder Chlor, C₁-C₄ Alkoxy, wie zum Beispiel Methoxy oder Ethoxy, Amino, ein 5- oder 6-gliedriger Stickstoff Heterozyklus der Formel (a), (b) (c) oder (d) 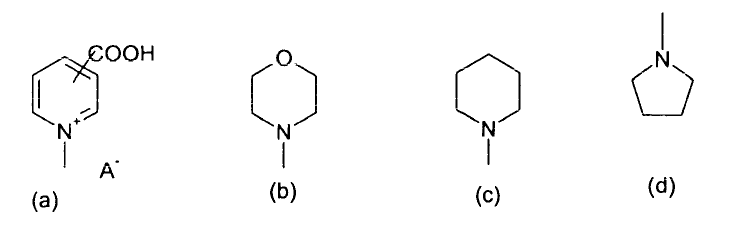 wobei wenn X eine Gruppe der Formel (a) ist
A⁻ für Fluorid, Chlorid, oder für das Äquivalent eines Sulfations steht und n 1 oder 2 bedeutet;
oder X ist ein gegebenenfalls mit ein oder zwei Sulfo- oder Hydroxy substituiertes Anilino, ein Alkylamino oder N,N-Dialkylamino mit C₁-C₄-Alkyl, beispielsweise N,N Dimethylamino, oder N,N-Diethylamino;
R¹ ist C₁-C₆ Alkyl, wie Methyl, Ethyl, n-Propyl-. i-Propyl-, n-Butyl-, i-Butyl-, sec-Butyl-, tert-Butyl-, Pentyl-, Hexyl-, C₁-C₆-Alkoxy, wie Methoxy-, Ethoxy-, Propyloxy-, Butyloxy-, Chlor, C₁-C₄- Alkylcarbonylamino-, wie zum Beispiel Methylcarbonylamino-, Ethylcarbonylamino-, Propylcarbonylamino-, Butylcarbonylamino-, Arylcarbonylamino-, wie zum Beispiel Phenylcarbonylamino und ist bevorzugt Methoxy;
R² hat eine Bedeutung von R¹, oder aber R¹ und R² bilden einen Ring der Formel (f), oder (g): 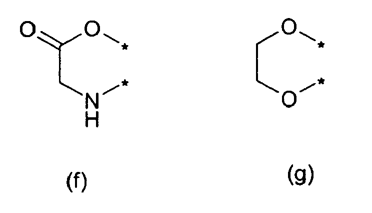
R³ ist C₁-C₆-Alkyl, wie Methyl, Ethyl, n-Propyl-. i-Propyl-, n-Butyl-, i-Butyl-, sec-Butyl-, tert-Butyl-, Pentyl-, Hexyl oder Wasserstoff;
Q ist eine Gruppierung der Formel (e) 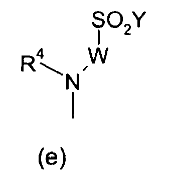 worin
R⁴ eine Bedeutung von R₃ hat oder Phenyl ist, das durch Chlor oder Sulfo substituiert sein kann;
W ist eine CₙH₂ₙ- Alkylengruppe, mit n gleich 2 bis 6, welche durch 1 oder 2 Sauerstoffatome oder eine NR⁵ Gruppe unterbrochen sein kann, wobei
R⁵ eine Bedeutung von R³ hat oder Phenyl ist,
oder aber wenn X Fluoro oder Chloro ist, kann Q eine Gruppe der Formel (a), (b), (c) oder (d) bedeuten,
Y ist Vinyl oder ist eine Gruppierung der Formel CH₂CH₂Z worin Z eine durch Einwirkung von Alkali eliminierbare Gruppierung wie z.B. Chloro, Acetyl, Phosphato, quaternäre Sticktoffgruppe und Sulfato ist.

2. Farbstoffe nach Anspruch 1 worin X Chloro oder Fluoro ist.

3. Farbstoffe nach Anspruch 1 oder 2 worin Y Ethenyl oder β-Sulfatoethyl ist.

4. Farbstoffe nach einem oder mehreren der Ansprüche 1-3 worin R¹ und R² Methoxy sind.

5. Farbstoffe nach einem oder mehreren der Ansprüche 1-4 worin W Ethylen, Propylen oder 3-Oxopentylen ist.

6. Farbstoffe nach einem oder mehreren der Ansprüche 1-5 worin R³ Wasserstoff und R⁴ Wasserstoff oder Methyl ist.

7. Farbstoff der Formel (6)

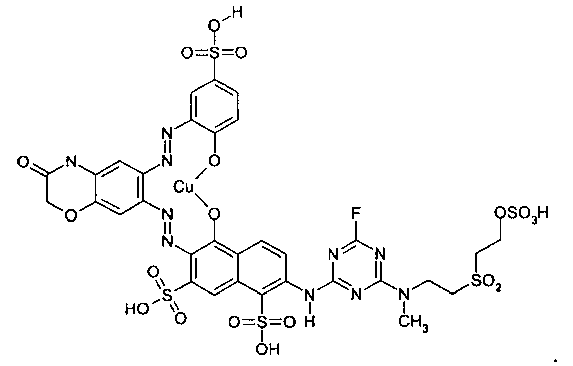

8. Farbstoff der Formel (11)

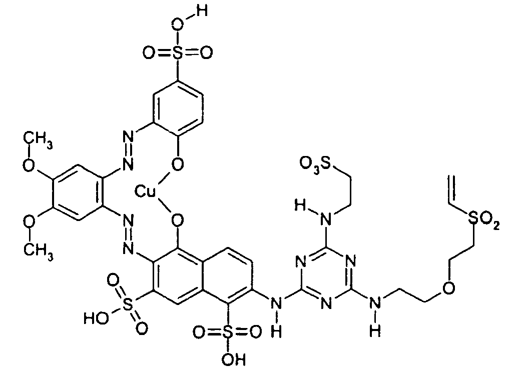

9. Verfahren zur Herstellung von Farbstoffen nach einem oder mehreren der Ansprüche 1-8 ausgehend von einer Verbindung der Formel (1a) durch Diazotierung mit Natriumnitrit in wässriger Salzsäure und anschließende Kupplung auf eine Verbindung der Formel (1b) einen Farbstoff der Formel 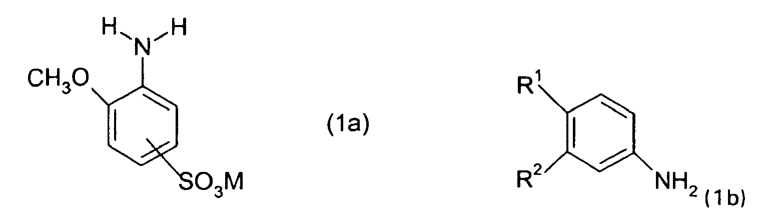 und weitere Diazotierung und Kupplung der so erhaltenen Verbindung der Formel (1c) 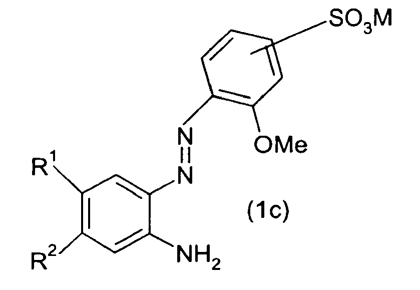 auf ein mit R³-N-substituiertes 5-Hydroxy-1,7-disulfo-2-naphthylamin, wobei sich eine Verbindung der Formel (1d) ergibt, 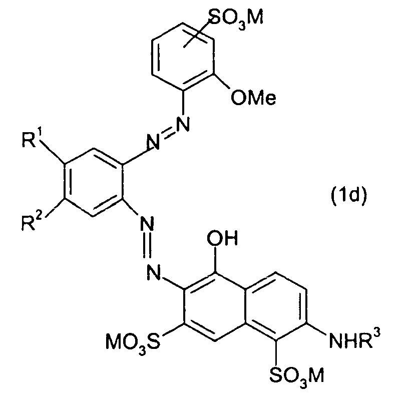 die durch Umsetzung mit Kupfersulfat-Pentahydrat und Ammoniak bei 80 bis 100°C erhält zu einem Chromophor der Formel (1e) führt, 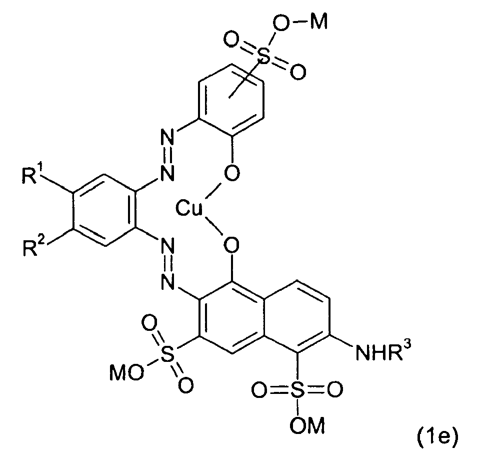 der durch Umsetzung mit einem Trihalogentriazin und anschließender Reaktion der so erhaltenen Dihalogeno-triazinyl-Bisazoverbindung (1f) 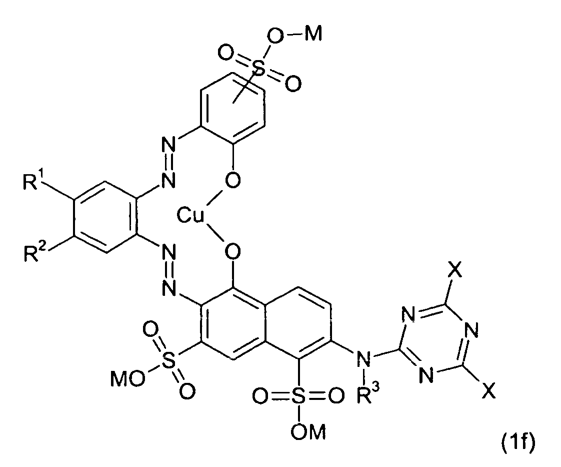 mit Q-H, wobei Q wie oben angegeben definiert ist, die erfindungsgemäße Verbindung (1) ergibt.

10. Verwendung der Farbstoffe nach mindestens einem der Ansprüche 1 bis 8 zum Färben oder Bedrucken von hydroxy- und/oder carbonamidgruppenhaltigem Material, vorzugsweise Fasermaterial.

11. Verfahren zum Färben oder Bedrucken von hydroxy- und/oder carbonamidgruppenhaltigem Material, vorzugsweise Fasermaterial, bei welchem man einen oder mehrere Farbstoffe in gelöster Form auf das Material aufbringt und den oder die Farbstoffe auf dem Material mittels Wärme oder mit Hilfe eines alkalisch wirkenden Mittels oder mittels beider Maßnahmen fixiert, **dadurch gekennzeichnet, dass** man als Farbstoffe einen oder mehrere Farbstoffe gemäß mindestens einem der Ansprüche 1 bis 6 einsetzt.

## Claims

1. A dye of the general formula (1): 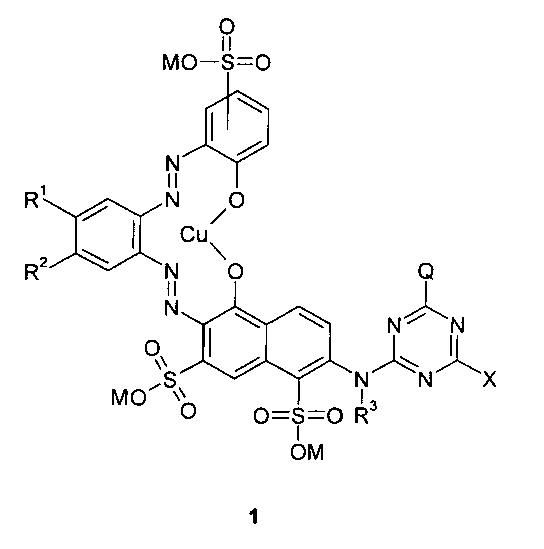 where
M is hydrogen, alkali, ammonium or the equivalent of an alkaline earth metal ion,
X is halogen, for example fluorine or chlorine, C₁-C₄ alkoxy, for example methoxy or ethoxy, amino, a 5- or 6-membered nitrogen heterocycle of the formula (a), (b) (c) or (d) 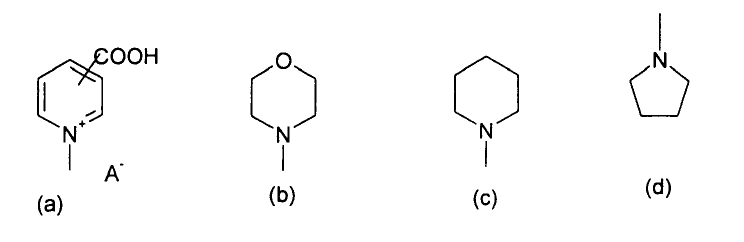 where when X is a group of the formula (a)
A-is fluoride, chloride or the equivalent of a sulfate ion and n is 1 or 2;
or X is unsubstituted or sulfo- or hydroxyl-mono- or -disubstituted anilino, an alkylamino or N,N-dialkylamino with C₁-C₄-alkyl, for example N,N-dimethylamino, or N,N-diethylamino
R¹ is C₁-C₆ alkyl, such as methyl, ethyl, n-propyl, i-propyl, n-butyl, i-butyl, sec-butyl, tert-butyl, pentyl, hexyl, C₁-C₆₋alkoxy, such as methoxy, ethoxy, propyloxy, butyloxy, chlorine, C₁-C₄-alkylcarbonylamino, for example methylcarbonylamino, ethylcarbonylamino, propylcarbonylamino, butylcarbonylamino, arylcarbonylamino, for example phenylcarbonylamino, and preferably is methoxy;
R² has any meaning of R¹ or else R¹ and R² combine to form a ring of the formula (f) or (g): 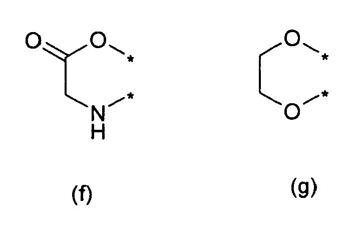
R³ is C₁-C₆-alkyl, such as methyl, ethyl, n-propyl, i-propyl, n-butyl, i-butyl, sec-butyl, tert-butyl, pentyl, hexyl or hydrogen;
Q is a grouping of the formula (e) 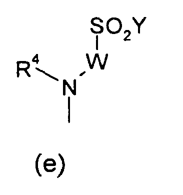 where
R⁴ has any meaning of R³ or is phenyl which may be substituted by chlorine or sulfo;
W is a CₙH₂ₙ-alkylene group where n is 2 to 6, which may be interrupted by 1 or 2 oxygen atoms or an NR⁵ group, where R⁵ has any meaning of R³ or is phenyl,
or else when X is fluorine or chlorine, Q can be a group of the formula (a), (b), (c) or (d),
Y is vinyl or is a grouping of the formula CH₂CH₂Z wherein
Z is an alkali-eliminable group, for example chloro, acetyl, phosphato, quaternary nitrogen group and is particularly preferably sulfato.

2. A dye as claimed in claim 1 wherein X is chloro or fluoro.

3. A dye as claimed in claim 1 or 2 wherein Y is ethenyl or β-sulfatoethyl.

4. A dye as claimed in one or more of claims 1-3 wherein R¹ and R² are each methoxy.

5. A dye as claimed in one or more of claims 1-4 wherein W is ethylene, propylene or 3-oxapentylene.

6. A dye as claimed in one or more of claims 1-5 wherein R³ is hydrogen and R⁴ is hydrogen or methyl.

7. The dye of the foumula (6)

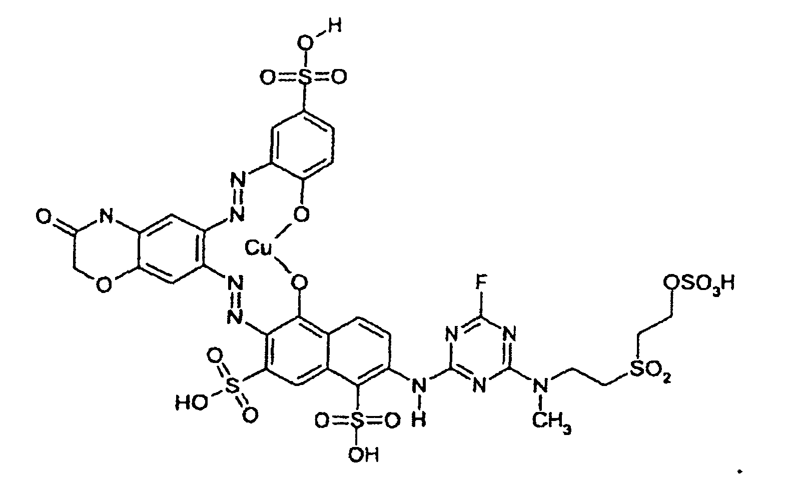

8. The dye of the formula (11)

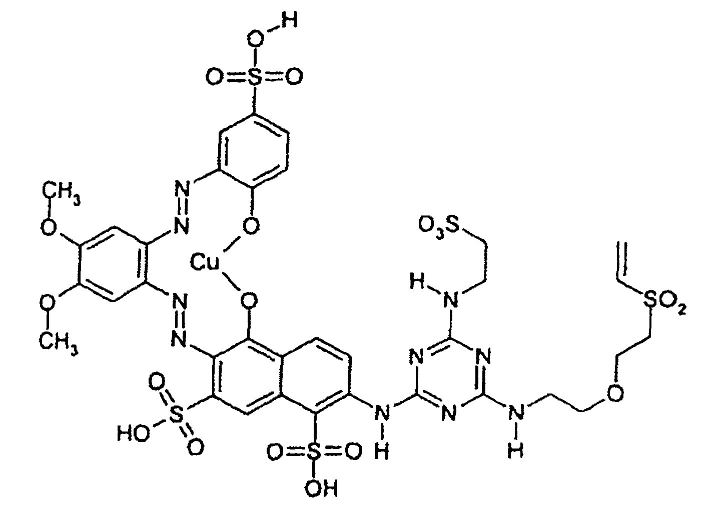

9. The process for preparing a dye as claimed in one or more of claims 1-8 starting from a compound of the formula (1a) by diazotization with sodium nitrite in aqueous hydrochloric acid and subsequent coupling onto a compound of the formula (1 b) to prepare a dye of the formula 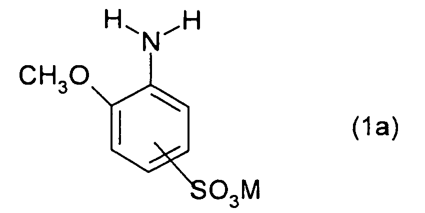 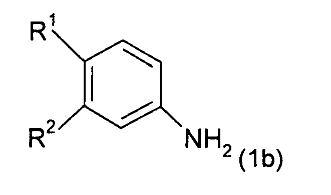 and further diazotization and coupling of the resultant compound of the formula (1c) 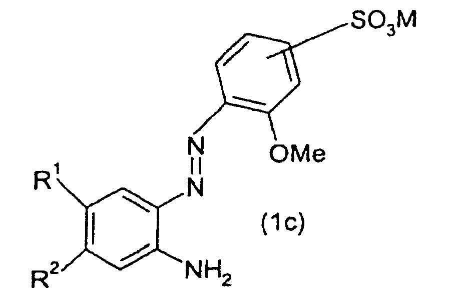 onto an R³-N-substituted 5-hydroxy-1,7-disulfo-2-naphthylamine to form a compound of the formula (1d) 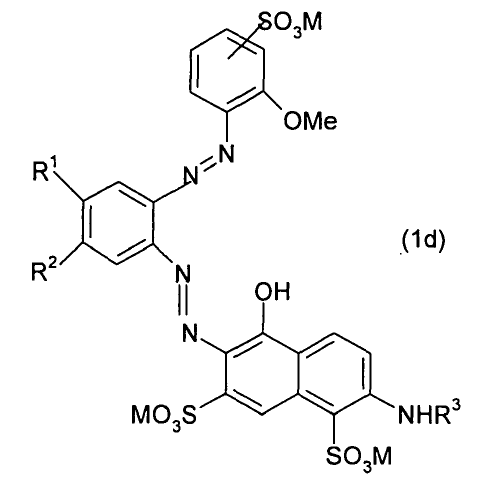 which is converted by reaction with copper sulfate pentahydrate and ammonia at 80 to 100°C to obtain a chromophore of the formula (1e) 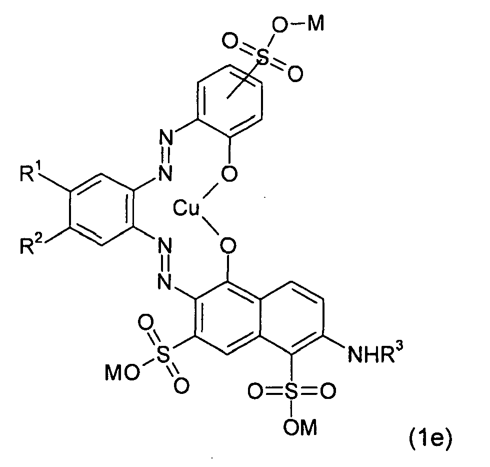 which is reacted with a trihalotriazine and subsequent reaction of the resultant dihalotriazinylbisazo compound (1f) 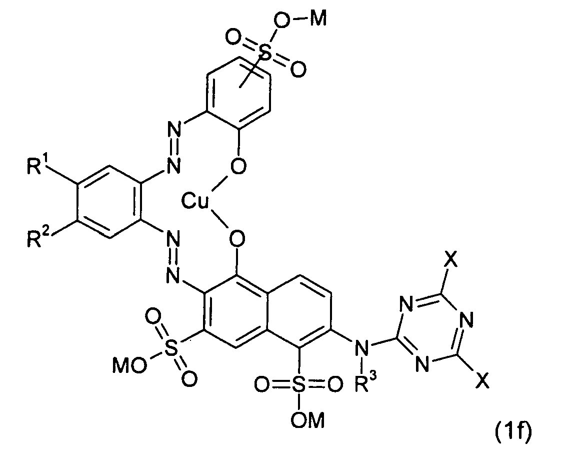 with Q-H, where Q is as defined above, to form the compound (1) of the invention.

10. The use of a dye as claimed in at least one of claims 1 to 8 for dyeing or printing hydroxyl- and/or carboxamido-containing material, preferably fiber material.

11. A process for dyeing or printing hydroxyl- and/or carboxamido-containing material, preferably fiber material, by applying one or more dyes in dissolved form to the material and fixing the dye or dyes on the material by means of heat or by means of an alkali or by means of both measures, which comprises using dyes comprising dyes as claimed in at least one of claims 1 to 8.

## Revendications

1. Colorants de formule générale (1) : 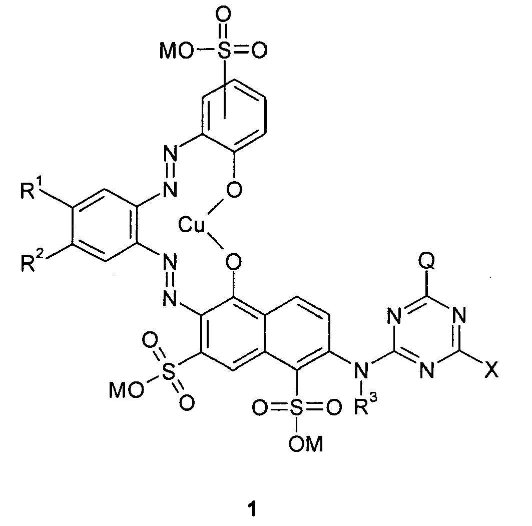 dans laquelle
M représente un hydrogène, un métal alcalin, un ammonium ou l'équivalent d'un ion de métal alcalino-terreux,
X représente un halogène, tel que, par exemple, un fluor ou un chlore, un alcoxy en C₁-C₄, tel que, par exemple, un méthoxy ou un éthoxy, un amino, un hétérocycle azoté à 5 ou 6 chainons de formule (a), (b), (c) ou (d) 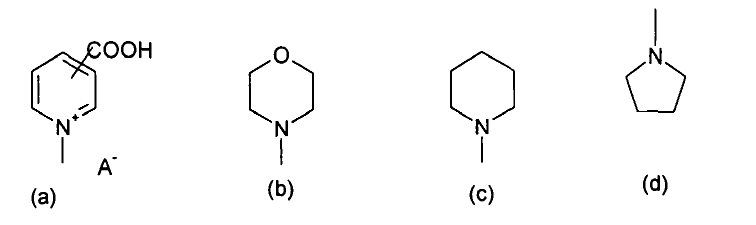 dans lesquelles, si X représente un groupe de formule (a),
A⁻ représente un fluorure, un chlorure ou l'équivalent d'un ion sulfate, et
N vaut 1 ou 2 ;
ou X représente un anilino éventuellement substitué par un ou deux groupes sulfo ou hydroxy, un alkylamino ou un N,N-dialkylamino renfermant un alkyle en C₁-C₄, par exemple, un N,N-diméthylamino ou un N,N-diéthylamino ;
R¹ représente un alkyle en C₁-C₆, tel qu'un méthyle, un éthyle, un n-propyle, un isopropyle, un n-butyle, un isobutyle, un sec-butyle, un tert-butyle, un pentyle, un hexyle, un alcoxy en C₁-C₆, tel qu'un méthoxy, un éthoxy, un propyloxy, un butyloxy, un chlore, un C₁-C₄-alkylcarbonylamino, tel que, par exemple, un méthylcarbonylamino, un éthylcarbonylamino, un propylcarbonylamino, un butylcarbonylamino, un arylcarbonylamino, tel que, par exemple, un phénylcarbonylamino, et représente de préférence un méthoxy ;
R² présente une signification de R¹, ou bien R¹ et R² forment un noyau de formule (f) ou (g) : 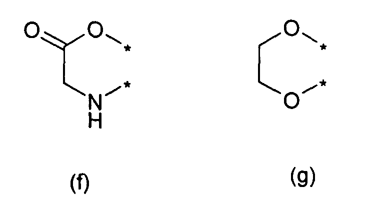
R³ représente un alkyle en C₁-C₆, tel qu'un méthyle, un éthyle, un n-propyle, un isopropyle, un n-butyle, un isobutyle, un sec-butyle, un tert-butyle, un pentyle, un hexyle ou un hydrogène ;
Q représente un groupement de formule (e) 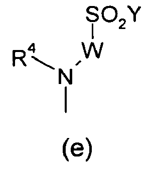 dans laquelle
R⁴ présente une signification de R³ ou représente un phényle, qui peut être substitué par un chlore ou un sulfo ;
W représente un groupe alkylène CₙH₂ₙ, dans lequel n vaut de 2 à 6, qui peut être interrompu par 1 ou 2 atomes d'oxygène ou un groupe NR⁵, dans lequel
R⁵ présente une signification de R³ ou représente un phényle,
ou bien si X représente un fluoro ou un chloro, Q peut représenter un groupe de formule (a), (b), (c) ou (d),
Y représente un vinyle ou représente un groupement de formule CH₂CH₂Z, dans laquelle
Z représente un groupement pouvant être éliminé par l'action d'un alcali, tel que, par exemple, un chloro, un acétyle, un phosphato, un groupe azoté quaternaire et un sulfato.

2. Colorants selon la revendication 1, dans lequel X représente un chloro ou un fluoro.

3. Colorants selon la revendication 1 ou 2, dans lesquels Y représente un méthényle ou un β-sulfatoéthyle.

4. Colorants selon l'une ou plusieurs des revendications 1 à 3, dans lesquels R¹ et R² représentent un méthoxy.

5. Colorants selon l'une ou plusieurs des revendications 1 à 4, dans lequel W représente un éthylène, un propylène ou un 3-oxapentylène.

6. Colorants selon l'une ou plusieurs des revendications 1 à 5, dans lesquels R³ représente un hydrogène et R⁴ représente un hydrogène et R⁴ représente un hydrogène ou un méthyle.

7. Colorant de formule (6)

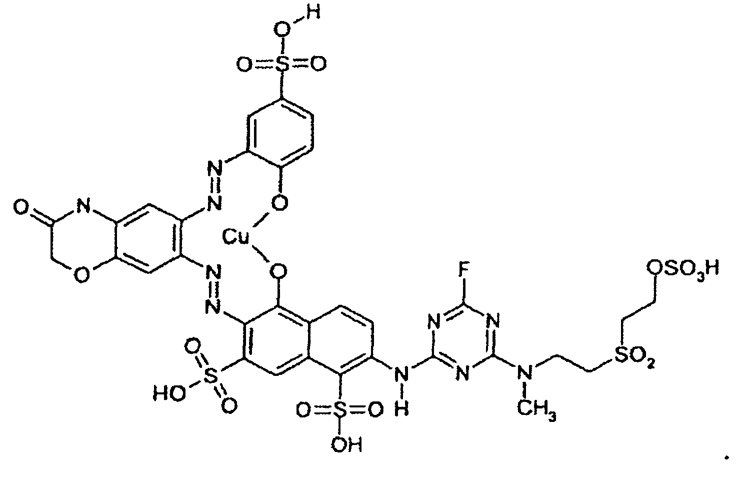

8. Colorant de formule (11)

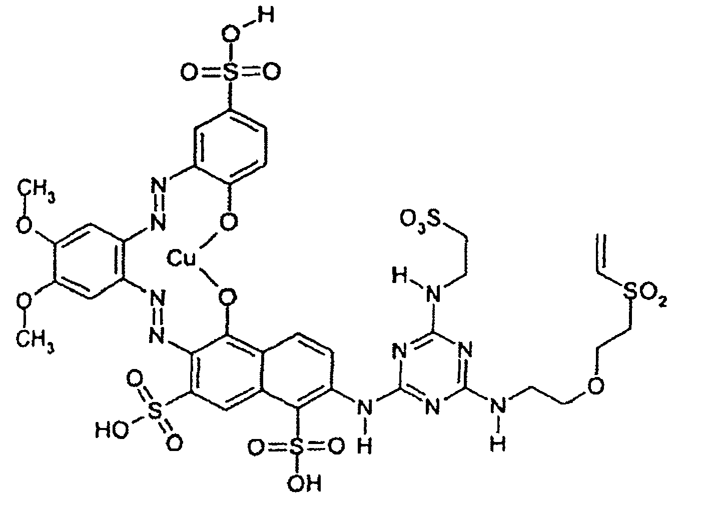

9. Procédé de préparation de colorants selon l'une ou plusieurs des revendications 1 à 8 en partant d'un composé de formule (1a) par diazotation avec du nitrite de sodium dans de l'acide chlorhydrique aqueux et par couplage subséquent, sur un composé de formule (1b), d'un colorant de formule 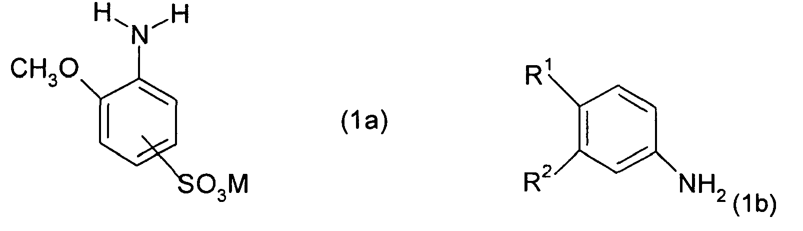 et par diazotation et couplage supplémentaires du composé de formule (1c) ainsi obtenu 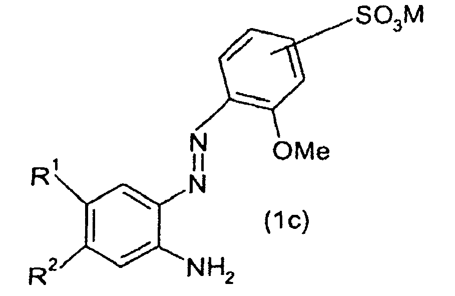 sur une 5-hydroxy-1,7-disulfo-2-naphtylamine R³-N-substituée, en donnant lieu à un composé de formule (1d), 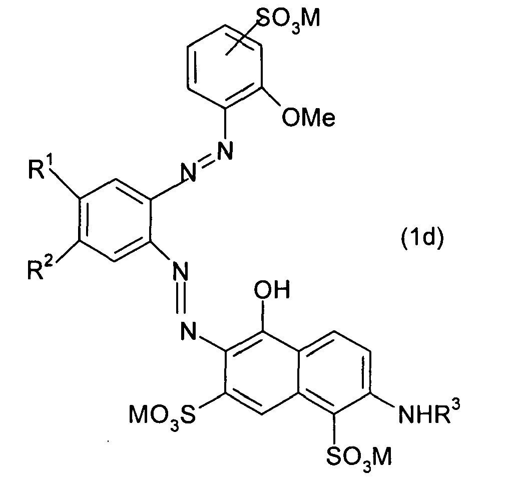 qui conduit, par réaction avec du pentahydrate de sulfate de cuivre et de l'ammoniac, entre 80 et 100°C, à un chromophore de formule (1e) 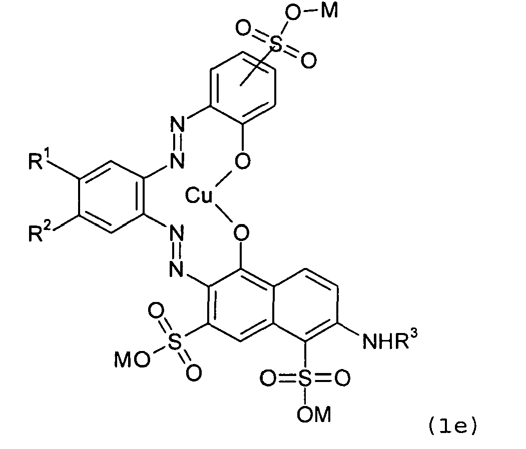 qui donne lieu, par réaction avec une trihalogénotriazine et par réaction subséquente du composé dihalogéno-triazinyl-bisazoïque (1f) ainsi obtenu 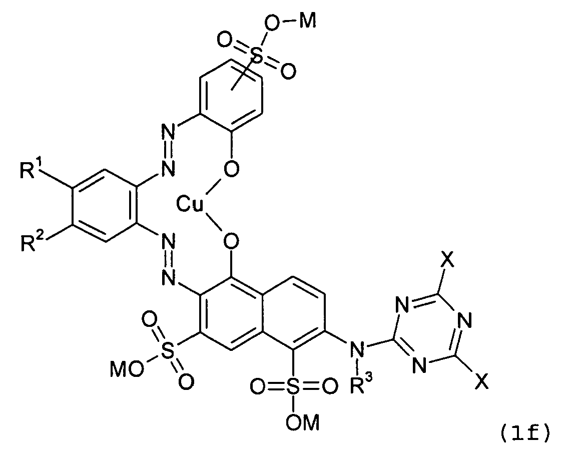 avec Q-H, dans lequel Q est défini tel qu'indiqué ci-dessus, au composé (1) selon l'invention.

10. Utilisation des colorants selon au moins l'une des revendications 1 à 8 pour la teinture ou l'impression d'une matière renfermant des groupes hydroxy et/ou carboxamide, de préférence d'une matière fibreuse.

11. Procédé de teinture ou d'impression d'une matière renfermant des groupes hydroxy et/ou carboxamide, de préférence d'une matière fibreuse, dans lequel un ou plusieurs colorants sont appliqués sous forme dissoute sur la matière et le ou les colorants sont fixés sur la matière par de la chaleur ou à l'aide d'un agent alcalin, ou au moyen des deux méthodes, **caractérisé en ce que** l'on utilise, en tant que colorants, un ou plusieurs colorants selon au moins l'une des revendications 1 à 8.
